# EUROPEAN PATENT APPLICATION

(11) **EP 1 271 865 A2**
(43) Date of publication of application: **02.01.2003**
(21) Application number: 02014058.8
(22) Date of filing: 28.06.2002
(51) Int. Cl.: H04L 12/64

(54) **Data playback apparatus and data relay apparatus**

(30) Priority: 29.06.2001 JP 2001198529; 26.04.2002 JP 2002126983
(71) Applicant: MATSUSHITA ELECTRIC INDUSTRIAL CO., LTD., Kadoma-shi, Osaka 571-8501 (JP)
(72) Inventor: Matsui, Yoshinori, Ikoma-shi, Nara 630-0212 (JP); Notoya, Youji, Neyagawa-shi, Osaka 572-0055 (JP)
(74) Representative: Balsters, Robert

(57) **Abstract**

When a server as a transmission source of content data is changed in a state where the content data from the server are played back in a receiving terminal, the receiving terminal receives the content data starting from the head of its not-yet-played portion to be played. A receiving terminal 100a for receiving content data transmitted from a server to be played is provided with a time information storage processing unit 105a for generating not-yet-played range information Ir indicating a range of a not-yet-played portion in the content data on the basis of time information concerning the playback process, which information is added to the content data in predetermined data units. When receiving a message for requesting to change the server S as the data transmission source, the receiving terminal 100a transmits a message requesting the content data to a new transmission source server with adding the not-yet-played range information to the data.

## Description

### FIELD OF THE INVENTION

The present invention relates to a data playback apparatus and a data relay apparatus and, more particularly, to a server change processing for changing a server as a data transmission source to another server in a state where data are being received and played back by a receiving terminal.

### BACKGROUND OF THE INVENTION

The processing of changing a server that is a transmission source of content data such as image data and audio data (hereinafter, referred to also as a specific server), to another server (hereinafter, referred to also as an alternate server) in a state where the content data are being received and played back by a receiving terminal is carried out in accordance with a REDIRECT request from the specific server. This REDIRECT request is one of methods according to an RTSP (Real Time Streaming Protocol), i.e., a protocol for exchanging messages between a server and a receiving terminal, and this method is issued from a data transmitting end to a receiving end. The RTSP is standardized (RFC2326) by Internet standardization groups such as IETF (Internet Engineering Task Force), and is increasingly implemented.

As methods according to RTSP, there are a SETUP request for setting a session between a server and a terminal (establishing a state in which data can be communicated), a PLAY request for requesting playback of data on the receiving end to a server, a TEARDOWN request for releasing a session (releasing a state in which data can be communicated) and the like, in addition to the REDIRECT request.

The REDIRECT request always includes Location information indicating a URL (Universal Resource Locator) of the alternate server. When receiving this REDIRECT request, the receiving terminal finishes the session between the present server (specific server) and the receiving terminal, establishes a session with the alternate server, and receives data transmitted from the alternate server to be played back.

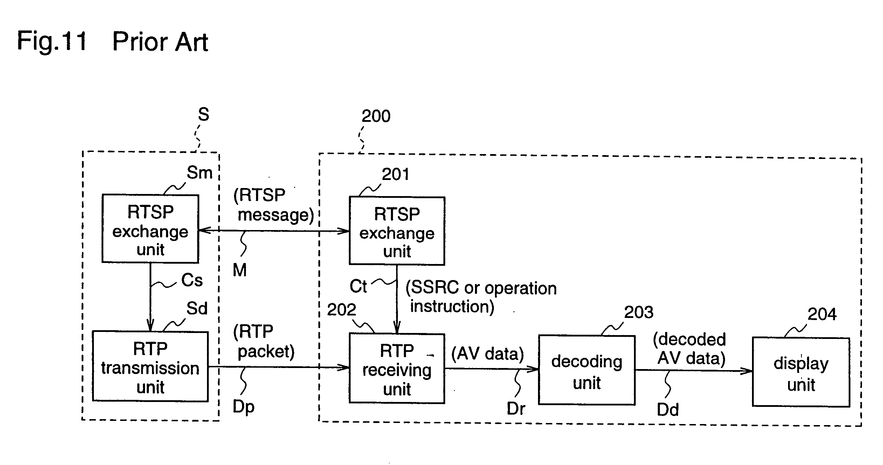

Figure 11 is a block diagram for explaining a prior art receiving terminal.

A prior art receiving terminal 200 receives content data including at least one of image data and audio data which are transmitted from a server S, via a network such as the Internet, and plays the received data. The receiving terminal 200 has an RTSP exchange unit 201 that exchanges RTSP messages M with the server S, and an RTSP receiving unit 202 that receives content data(hereinafter, referred to also as RTP packet data) Dp that is transmitted being contained in RTP packets from the server S, in accordance with a control signal Ct from the RTSP exchange unit 201.

The RTSP exchange unit 201 outputs an SSRC (Synchronization Source) as identification information that indicates an ID number for identifying an RTP packet, or operation instructing information that controls a data receiving operation in the RTP receiving unit 202, as the control signal Ct, on the basis of information that is obtained by exchanging RTSP messages M. The SSRC (packet identification information) that indicates the ID number of each packet is one of RTP packet attribution information that is supplied from the server. The ID numbers of RTP packets which are transmitted from one server and contain the same content data are all the same. The content data are audio/video data (AV data) including image information and sound information. The RTP receiving unit 202 extracts the content data which are contained in each RTP packet, and outputs AV data Dr corresponding to each frame.

The receiving terminal 200 has a decoding unit 203 for decoding the AV data Dr to output decoded AV data Dd, and a display unit 204 for performing image display or sound playback on the basis of the decoded AV data Dd.

The server S has an RTSP exchange unit Sm for exchanging messages with the receiving terminal 200, and an RTP transmission unit Sd for transmitting desired data being contained in RTP packets to the receiving terminal 200 in accordance with a control signal Cs from the RTSP exchange unit Sm.

Next, the operation will be described.

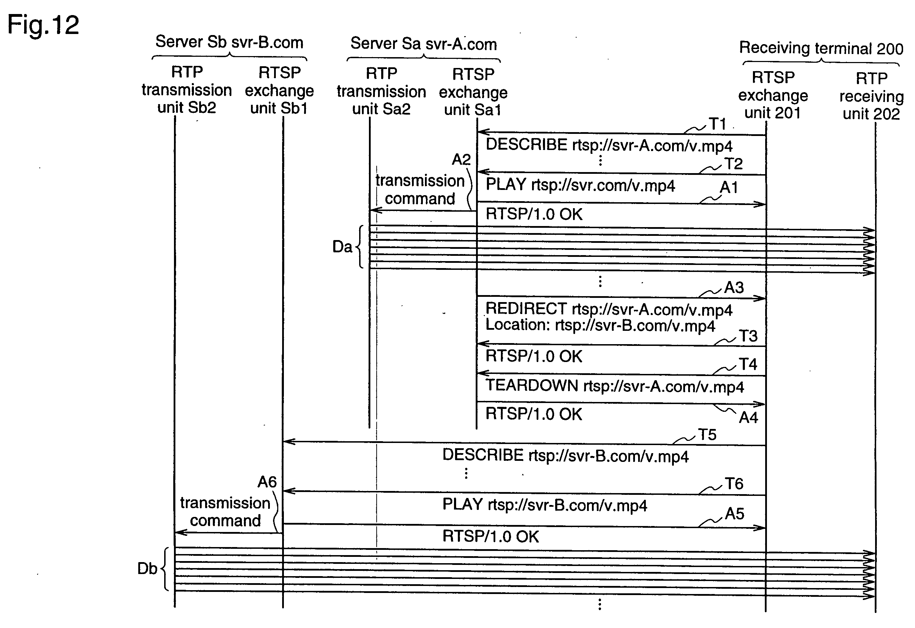

Figure 12 is a diagram showing the exchange of the RTSP messages M and the transmission of the RTP packets Dp, performed between the server and the receiving terminal. In figure 12, for convenience of explanation, a specific server Sa having an RTSP exchange unit Sa1 and an RTP transmission unit Sa2, and an alternate server Sb having an RTSP exchange unit Sb1 and an RTP transmission unit Sb2 are shown as servers S. Further, to simplify the explanations, the message exchanges performed between a DESCRIBE request that requests the content data and a PLAY request that requests the data playback in the receiving terminal are omitted here.

When a DESCRIBE request (DESCRIBE rtsp://svr-A.com/v.mp4) T1 that requests file data (v.mp4) held in the server (svr-A.com) Sa is issued as the RTSP message M from the RTSP exchange unit 201 in the receiving terminal 200 to the server Sa, this DESCRIBE request T1 is received by the RTSP exchange unit Sa1 in the server Sa, and a response (RTSP/1.0 OK) to this request T1 is issued to the receiving terminal 200. Thereafter, the message M is further exchanged between the server Sa and the receiving terminal 200.

Then, when a PLAY request (PLAY rtsp://svr-A.com/v.mp4) T2 that requests playback of the file data (v.mp4) is issued as an RTSP message M from the RTSP exchange unit 201 in the receiving terminal 200 to the server (svr-A.com) Sa, this PLAY request T2 is received by the RTSP exchange unit Sa1 in the server Sa, and a response (RTSP/1.0 OK) A1 to the request T2 is successively issued by the RTSP exchange unit Sa1 to the receiving terminal 200. Thereafter, in the server Sa, a transmission command A2 that instructs to transmit the file data (V.mp4) to the receiving terminal is issued from the RTSP exchange unit Sa1 to the RTP transmission unit Sa2.

Then, the file data (v.mp4) are transmitted from the RTP transmission unit Sa2 in the server Sa to the receiving terminal 200 being contained in RTP packets as RTP packet data Da.

The RTP packet data Da are received by the RTP receiving unit 202 in the receiving terminal 200 in accordance with the control signal Ct from the RTSP exchange unit 201, and audio/video data (AV data) Dr corresponding to each frame are outputted. The AV data Dr are decoded by the decoding unit 203, and decoded AV data Dd are outputted to the display unit 204. The display unit 204 performs image display and sound playback on the basis of the decoded AV data Dd.

When the REDIRECT request (REDIRECT rtsp://svr-A.com/v.mp4) A3 is issued from the server Sa as the RTSP message M in a state where the data Da transmitted from the server Sa are received and played back in the receiving terminal 200, this REDIRECT request A3 is received by the RTSP exchange unit 201 in the receiving terminal 200. This REDIRECT request A3 requests to finish the session with the present server (specific server) Sa, establish a new session with the alternate server Sb, and receive content data from the alternate server to be played back. This REDIRECT request A3 includes Location information (Location: rtsp://svr-B.com/v.mp4) indicating a URL (Universal Resource Locator) of the alternate server.

Then, a response (RPST/1.0 OK) T3 that acknowledges the REDIRECT request A3 is issued from the RTSP exchange unit 201 to the server Sa. Further, a TEARDOWN request (TEARDOWN rpst://svr-A.com/v.mp4) T4 that request termination of the session is issued to the server Sa. Then, in the server Sa, a processing for issuing a response (RTSP/1.0 OK) A4 that acknowledges the TEARDOWN request T4, as well as finishing the transmission of the RTP packet data Da from the server Sa is carried out.

After the response A4 to the TEARDOWN request T4 from the server Sa is received by the RTSP exchange unit 201 in the receiving terminal 200, a DESCRIBE request (DESCRIBE rtsp://svr-B.com/v.mp4) T5 that requests the file data (v.mp4) held in the server (svr-B.com) Sb is issued to the server Sb as the RTSP message M, on the basis of the Location information of the alternate server Sb included in the TEARDOWN request T4.

Then, this DESCRIBE request T5 is received by the RTSP exchange unit Sb1 in the server Sb, and a response to this request T5 is issued from the RTSP exchange unit Sb1 to the receiving terminal 200. Thereafter, the message M is further exchanged between the server Sb and the receiving terminal 200.

Then, when the PLAY request (PLAY rtsp://svr-B.com/v.mp4) T6 that request the playback of the file data (V.mp4) in the receiving terminal is issued from the RTSP exchange unit 201 to the server (svr-B.com) Sb as the RTSP message M, this PLAY request T6 is received by the RTSP exchange unit Sb1 in the server Sb, and a response (RTSP/1.0 OK) A5 to the request T6 is issued from the RTSP exchange unit Sb1 to the receiving terminal 200. Thereafter, in the server Sb, a transmission command A6 that instructs to transmit the file data (v.mp4) to the receiving terminal 200 is issued from the RTSP exchange unit Sb1 to the RTP transmission unit Sb2.

Then, the file data (v.mp4) Db are transmitted from the RTP transmission unit Sb2 to the receiving terminal 200 as RTP packet data Dp, being contained in RTP packets.

The RTP packet data Db are received by the RTP receiving unit 202 in the receiving terminal 200 on the basis of the control signal Ct from the RTSP exchange unit 201, and audio/video data (AV data) Dr corresponding to each frame are outputted. The AV data Dr are decoded by the decoding unit 203, and decoded AV data Dd are outputted to the display unit 204. In the display unit 204, image display and sound playback is performed on the basis of the decoded AV data Dd.

As described above, when receiving the REDIRECT request from the server Sa, the receiving terminal 200 carries out the server change processing for finishing a session with the present server (specific server) Sa, and establishing a new session with the alternate server Sb. Thereafter, the receipt and playback of content data from the alternate server is started.

In the conventional receiving terminal 200, when the specific server as a supply source of data is switched to the alternate server in accordance with the REDIRECT request in a state where content data are received from the specific server Sa and played back, the receipt and playback of content data from the alternate server is started unfavorably from its head portion.

Hereinafter, this problem will be described in more detail. Descriptions will be given of a case where the REDIRECT request from the server Sa is received when playback of content data whose playback time is ten minutes on the whole is carried out in the receiving terminal 200 starting from the head of the content data up to a position whose playback time is six minutes, and a transmission server for the content data is switched from the specific server Sa to the alternate server Sb.

In this case, since the conventional receiving terminal 200 only requests the content data to the server Sb, content data are transmitted from the server Sb starting from its head portion. Therefore, in the receiving terminal 200, the receipt and playback of the content data is performed from its head portion. Consequently, although the portion of the content data corresponding to first six minutes has been already viewed, this portion is adversely played back again in the receiving terminal 200. That is, when the server is changed in accordance with the REDIRECT request, efficient playback cannot be performed in the receiving terminal, and also extra communication fees are required.

In receiving terminals including a time bar for designating a playback position, the user can set the playback position after the server changing by adjusting the time bar so as not to play back a portion which has already been played back. However, not all the receiving terminals include such a user interface. Further, there may be some contents whose playback positions cannot be adjusted by the user operation.

### SUMMARY OF THE INVENTION

The present invention has for its object to provide a data playback apparatus and a data playback method which, when a server as a transmission source of content data is changed in accordance with a REDIRECT request while the content data which are supplied from the data transmission source are being received and played back in a receiving terminal, can continuously perform receipt and playback of the content data starting from a data playback position at a timing when the server is changed.

It is an object of the present invention to provide a data relay apparatus and data relay method which, when a server as a transmission source of content data is changed in accordance with a REDIRECT request from the server as the data transmission source while the content data which are supplied from the data transmission source is being relayed and transmitted to a receiving terminal, can continuously perform transmission of the content data to the receiving terminal from a data transmission position at a timing when the transmission server is changed.

Other objects and advantages of the present invention will become apparent from the detailed description and specific embodiments described are provided only for illustration since various additions and modifications within the spirit and scope of the invention will be apparent to those of skill in the art from the detailed description.

According to a 1st aspect, there is provided a data playback apparatus which requests data including at least one of image information and audio information, and plays back the data transmitted in accordance with the request while receiving the data, comprising: a message transmission/receiving unit operable to transmit/receive messages to establish a state in which data can be received, and outputting a control signal that controls a receiving operation for the data; a data receiving unit operable to receive the data in accordance with the control signal; and a range information generation unit operable to generate not-yet-played range information that indicates a range of a not-yet-played portion in the data, on the basis of time information concerning a playback process, which is added to the data in predetermined data units, and the message transmission/receiving unit transmits a message for requesting data corresponding to the not-yet-played portion indicated by the not-yet-played range information to a new server, when receiving a message requesting to change the server as a target of the data request. Therefore, when a server that is transmitting desired data is changed in accordance with a server changing request during when the desired data from the server are played back by the data playback apparatus, the data playback apparatus can receive and play back the desired data starting from the head of the not-yet-played portion. Accordingly, after the server is changed, receiving and playing back again already-played portions of the desired data can be avoided, whereby the communication fees can be reduced, and further reproduced images and sounds can be efficiently viewed and listened.

According to a 2nd aspect of the present invention, in the data playback apparatus of the 1st aspect, the time information is information which is added to the data for each frame as the data unit, and indicates a time when the frame is displayed. Therefore, after the server is changed, display of reproduced images can be performed starting from a head frame of a not-yet-played portion in the desired data.

According to a 3rd aspect of the present invention, in the data playback apparatus of the 1st aspect, the data receiving unit receives the data which are contained in packets, and the time information is added to each of the packets. Therefore, after the server is changed, the data can be received starting from a head packet that contains a not-yet-played portion in the desired data.

According to a 4th aspect of the present invention, in the data playback apparatus of the 3rd aspect, the range information generation unit generates the not-yet-played range information on the basis of latest time information added to a latest packet that was received by the data receiving unit, and either first initial time information added to a packet that was received first after the data receivable state is established, or second initial time information added to a packet that is to be received first after the data receivable state is established, which is obtained by the transmission/receipt of messages by the message transmission/receiving unit. Therefore, the second initial time information is used in cases where the second initial time information is obtained, while the first initial time information is used in cases where the second initial time information is not obtained.

According to a 5th aspect of the present invention, there is provided a data playback method for requesting data including at least one of image information and audio information, and playing back the data transmitted in accordance with the request while receiving the same, comprising: a message transmission/receiving step of transmitting/receiving messages to establish a state in which data can be received, and generating a control signal that controls a receiving operation for the data; a data receiving step of receiving the data in accordance with the control signal after the data receivable state is established; and a range information generation step of generating not-yet-played range information that indicates a range of a not-yet-played portion in the data, on the basis of time information concerning a playback process, which is added to the data in predetermined data units, and the message transmission/receiving step transmits a message for requesting data corresponding to the not-yet-played portion indicated by the not-yet-played range information to a new server, when a message for requesting to change the server as a target of the data request is received. Therefore, when a server that is transmitting the desired data is changed in accordance with a server changing request during when the desired data from the server are being played back in a receiving terminal, the receiving terminal can receive and play back the desired data starting from the head of the not-yet-played portion. Accordingly, communication fees required for the receipt of data after the server is changed can be reduced, and further reproduced images and sounds can be efficiently viewed and listened.

According to a 6th aspect of the present invention, there is provided a data relay apparatus that is connected to plural servers via a network, and requests data including at least one of image information and audio information to a specific server selected from the plural servers, to relay the data transmitted from the specific server in accordance with the request to transmit the same, including: a server-side message exchange unit operable to exchange messages with the specific server to establish a state where the data transmitted from the specific server can be received, and output a receipt control signal that controls a receiving operation for the transmitted data; a data receiving unit operable to receive the data transmitted from the specific server in accordance with the receipt control signal; and a range information generation unit operable to generate not-yet-played range information that indicates a range of a not-yet-played portion in the data, on the basis of time information concerning a playback process, which information is added to the data in predetermined data units, and the server-side message exchange unit transmits a message for requesting the data to an alternate server with adding the not-yet-played range information to the message, when a message for requesting to switch a server as a supply source of the data from the specific server to the alternate server is received from the specific server. Therefore, when a server which is transmitting desired data is changed in accordance with a server changing request during when the desired data from the server are played back in the receiving terminal, the data relay apparatus can receive the desired data starting from the head of the not-yet-played portion and transmit the data to the receiving terminal. Accordingly, communication fees required for the receipt of data after the server is changed can be reduced without changing the structure of the receiving terminal, and further reproduced images and sounds can be efficiently viewed and listened.

According to a 7th aspect of the present invention, the data relay apparatus of the 6th aspect including: a buffer for temporarily retaining the received data; a terminal-side message exchange unit operable to exchange messages with a transmission destination to establish a state where the data retained in the buffer can be transmitted, and outputting a transmission control signal that controls a transmission operation for the data; and a data transmission unit operable to transmit the data retained in the buffer on the basis of the transmission control signal. Therefore, even when a server which is transmitting desired data is changed in accordance with a server changing request during when the desired data from the server are played back in a receiving terminal, a session that is established between the data relay apparatus and the receiving terminal (i.e., a state in which data can be transmitted from the data relay apparatus to the receiving terminal) is not finished. Accordingly, even when the server that is transmitting the desired data is changed, message exchanges for finishing a session and establishing a new session between the data relay apparatus and the receiving terminal are not required.

According to an 8th aspect of the present invention, in the data relay apparatus of the 7th aspect, the data receiving unit receives the data which are contained in packets transmitted from the server as a transmission source of the data, and the data transmission unit has an attribute information rewriting section for rewriting attribute information that is added to packets which contain data transmitted from the alternate server, into attribute information that is added to packets which contain the data transmitted from the specific server so that a data playback process in a transmission destination of the data is not interrupted, and transmits the packets which contain the data transmitted from the alternate server, with rewriting the attribute information thereof into the attribute information of the packets containing the data transmitted from the specific server. Therefore, even when a server that is transmitting desired data is changed in accordance with a server changing request during when the desired data from the server are played back in a receiving terminal, the receiving terminal performs the playback of the desired data without interruption, whereby the display states of reproduced images are not disturbed, and noises are not included in played sounds.

According to a 9th aspect of the present invention, there is provided a data relay method for requesting data including at least one of image information and audio information, to a specific server selected from plural servers on a network, and relaying the data transmitted from the specific server in accordance with the request to transmit the same, comprising: a message exchange step of exchanging messages with the specific server to establish a state in which data transmitted from the specific server can be received, and generating a receipt control signal that controls a receiving operation for the transmitted data; a data receiving step of receiving the data transmitted from the specific server in accordance with the receipt control signal after the transmitted data receivable state is established; and a range information generation step of generating not-yet-played range information that indicates a range of a not-yet-played portion in the data on the basis of time information concerning a playback process, which is added to the data in predetermined data units, and the message exchange step transmits a message for requesting the data to an alternate server with adding the not-yet-played range information to the message, when a message for requesting to switch a server as a supply source of the data from the specific server to the alternate server is issued from the specific server. Therefore, when a server that is transmitting desired data is changed in accordance with a server changing request during when the desired data from the server are played back in a receiving terminal, the data relay apparatus receives the desired data starting from the head of its not-yet-played portion, and transmits the data to the receiving terminal, whereby communication fees required for receipt of the data after the server is changed can be reduced without changing the structure of the receiving terminal, and further reproduced images and sounds can be efficiently viewed and listened.

### BRIEF DESCRIPTION OF THE DRAWINGS

Figure 1 is a block diagram for explaining a data playback apparatus according to a first embodiment of the present invention.
Figure 2 is a diagram showing storage areas in a time information storage processing unit of the data playback apparatus according to the first embodiment.
Figure 3 is a flowchart showing an operation process in the time information storage processing unit of the data playback apparatus according to the first embodiment.
Figure 4 is a diagram showing accesses for RTSP messages M and packet data D, which are performed between a server and a receiving terminal according to a predetermined protocol.
Figure 5(a) is a diagram showing details of message exchange between the data playback apparatus of the first embodiment and a server, and figure 5(b) is a diagram showing SDP information included in a REDIRECT request for the data playback apparatus.
Figure 6 is a block diagram for explaining a data playback apparatus according to a second embodiment of the present invention.
Figure 7 is a block diagram for explaining a data relay apparatus according to a third embodiment of the present invention.
Figure 8 is a block diagram illustrating a specific structure of the data relay apparatus according to the third embodiment.
Figure 9 is a diagram showing accesses of messages and data between the data relay apparatus according to the third embodiment and servers, and the data relay apparatus and a receiving terminal.
Figure 10 is a diagram for explaining a portable phone as a data playback apparatus according to a fourth embodiment of the present invention.
Figure 11 is a block diagram illustrating a prior art data playback apparatus.
Figure 12 is a diagram showing accesses for RTSP messages and packet data D, which are performed between a server and a receiving terminal according to a predetermined protocol.

### DETAILED DESCRIPTION OF THE PREFERRED EMBODIMENTS

Hereinafter, embodiments of the present invention will be described.

### [Embodiment 1]

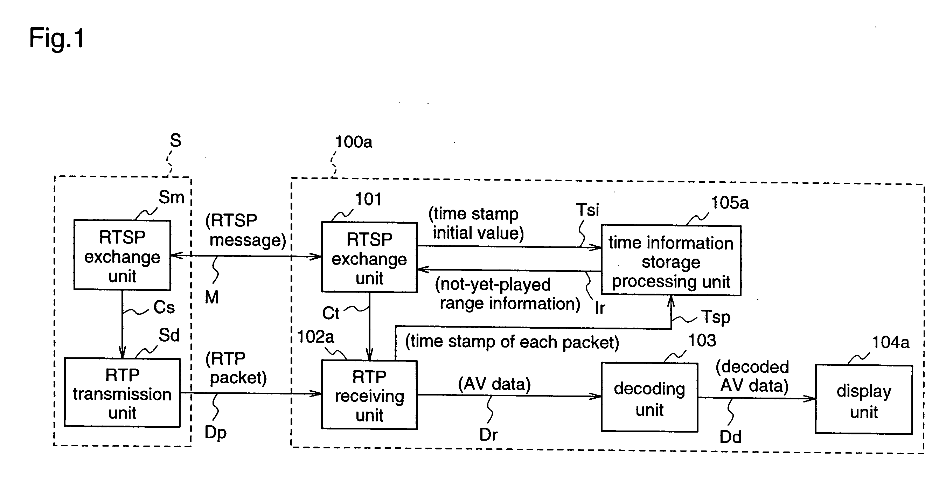

Figure 1 is a block diagram for explaining a data playback apparatus according to a first embodiment of the present invention.

A data playback apparatus (hereinafter, also referred to as a receiving terminal) 100a according to the first embodiment receives content data including image data and audio data which are transmitted from a server S via a network such as Internet to be played, as well as issues a request including information that indicates a range of contents data to be played back, as a PLAY request to an alternate server when a REDIRECT request that requests to switch a server as a supply source of the content data from a first server (specific server) to a second server (alternate server) is issued from a server.

More specifically, the data playback apparatus (receiving terminal) 100a according to the first embodiment includes, like the prior art receiving terminal 200, an RTSP exchange unit 101 for exchanging RTSP messages M with various servers S on the network; an RTP receiving unit 102a for receiving content data (RTP packet data) Dp which are transmitted being contained in RTP packets from the server S, on the basis of control signal Ct that is outputted from the RTSP exchange unit 101; and a time information storage processing unit 105a for storing time information that is obtained by the RTSP exchange unit 101 and the RTP receiving unit 102a as well as generating not-yet-played range information Ir indicating a range of not-yet-played portion in the content data on the basis of the obtained time information.

Here, the RTSP exchange unit 101 establishes a session (a state in which data transmitted from the server can be received) between a predetermined server and the receiving terminal by exchanging the RTSP message M, and outputs time information Tsi indicating a time stamp initial value Vinfo corresponding to the established session to the time information storage processing unit 105a. In addition, the RTSP exchange unit 101 issues a PLAY request including playback range.information that is read from the time information storage processing unit 105a to the specific server Sa, and issues a PLAY request including the not-yet-played range information Ir that is read from the time information storage processing unit 105a to the alternate server Sb. Here, the playback range information is information concerning the playback time of the content data. The time information Tsi indicating the time stamp initial value Vinfo is information that is included in an RTP Info field included in a response to the receiving terminal 100a with respect to the PLAY request and, more specifically, information indicating a time stamp value that is added to a packet which is to be received first after a session is established.

The RTP receiving unit 102a receives the RTP packet data Dp from the server and outputs audio/video data (AV data) Dr corresponding to each frame, as well as outputs time stamp information Tsp that is added to each RTP packet to the time information storage processing unit 105a.

The time information storage processing unit 105a has a memory (not shown) that stores the time stamp initial value Vinfo which is designated by the time information Tsi included in the RTP info field and a time stamp value added to each RTP packet, and generates the not-yet-played range information Ir from the time stamp values stored in the memory.

The receiving terminal 100a has, as the conventional receiving terminal 200, a decoding unit 103 for decoding AV data Dr from the RTP receiving unit 102a to output decoded AV data Dd, and a display unit 104a for performing image display and sound playback on the basis of the decoded AV data Dd.

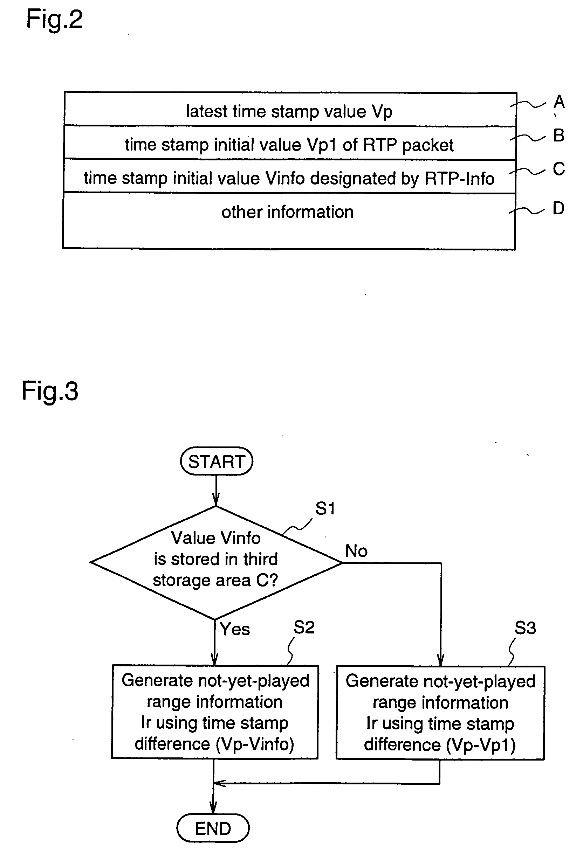

Figure 2 is a diagram showing data storage areas in the memory of the time information storage processing unit 105a.

The memory in the time information storage processing unit 105a has a first storage area A that stores the latest time stamp value Vp, a second storage area B that stores a time stamp initial value Vp1 of an RTP packet, a third storage area C that stores a time stamp initial value Vinfo which is designated by information of the RTP Info field, and a fourth storage area D that stores information other than the time stamp.

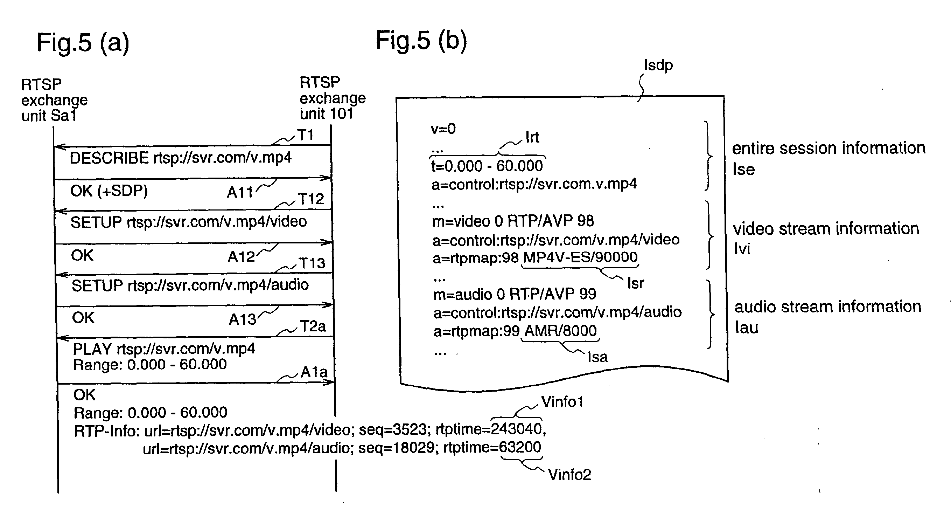

More specifically, the first storage are A is an area for storing a time stamp value of a received RTP packet as the latest time stamp value Vp, every time the RTP packet is received by the RTP receiving unit 102a. The second storage area B is an area for storing a time stamp value of an RTP packet that is received first after a session is established between the receiving terminal 100a and the server S, as the time stamp initial value Vp1 of the RTp packet. Further, the fourth storage area D is an area for storing SDP (Session Description Protocol) information Isdp included in a response from the server with respect to the REDIRECT request from the receiving terminal, and the like. As shown in figure 5(b), the SDP information Isdp includes information Ise concerning the entire session, information Ivi concerning a video stream, information Iau associated with an audio stream, and the like. The information Ivi and Iau include scale information (MP4V-ES/90000) Isv and scale information (AMR/8000) Isa associated with a ratio between a time stamp value and a unit of time (one second), respectively. Further, the information Ise concerning the entire session includes playback time information (t=0.0000-60.000) Irt indicating the playback time of the whole content data in this session. In this case, it is shown that the content data are played back in a range from zero second to 60 seconds.

To be more specific, the scale information (MP4V-ES/90000) Isv shows that the time stamp value (90000) of the video stream corresponds one second. The scale information (AMP/8000) Isa shows that the time stamp value (8000) of the audio stream corresponds to one second.

In the packet transmission according to RTP/UDP (User Datagram Protocol), packets do not arrive at the receiving terminal according to the order in which the packets are transmitted and the transmission orders vary with packet transmission lines. Therefore, when the order in which the RTP packets arrive is changed from the order in which the packets are transmitted, the RTP receiving unit 102a changes the arrival order of the received RTP packets on the basis of sequence numbers added to the RTP packets so as to coincide with the transmission order.

The operation processing carried out in the time information storage processing unit 1.05a comprises a time stamp subtraction process that uses the time stamp values stored in the respective storage areas A to C, a time stamp conversion process that converts a result of the subtraction process into time information (already-played range information) indicating a range corresponding to an already-played portion of the content data based on one second, and a not-yet-played portion calculation process that obtains not-yet-played range information Ir indicating a time range corresponding to a not-yet-played portion of the content data from the already-played range information.

To be more specific, in the time stamp subtraction process, a difference in the time stamp ΔVinfo (=Vp-Vinfo) is obtained by subtracting the time stamp initial value Vinfo from the latest time stamp value Vp stored in the first storage area A when the time stamp initial value Vinfo is stored in the third storage area C, while a difference in the time stamp ΔVp1 (=Vp-Vp1) is obtained by subtracting the time stamp initial value Vp1 stored in the second storage area B from the latest time stamp value Vp stored in the first storage area A when the time stamp initial value Vinfo is not stored in the third storage area C. Further, in the time stamp conversion process, the difference in the time stamp ΔVinfo or ΔVp1 is converted into a time length (for example, 20 seconds) of the already-played portion based on one second, using the scale information Isa or Isv. Further, in the not-yet-played portion calculation process, not-yet-played range information Ir indicating a time.range (t=20.000-60.000) corresponding to a not-yet-played portion of the content data is obtained on the basis of the time range information corresponding to the already-played portion, which has been obtained in the time stamp conversion process.

Next, the operation will be described.

Hereinafter, a description will be given of a case where a server that supplies data of a file (v.mp4) as content data is switched from the first server (svr-A.com) Sa to the second server (svr-B.com) Sb.

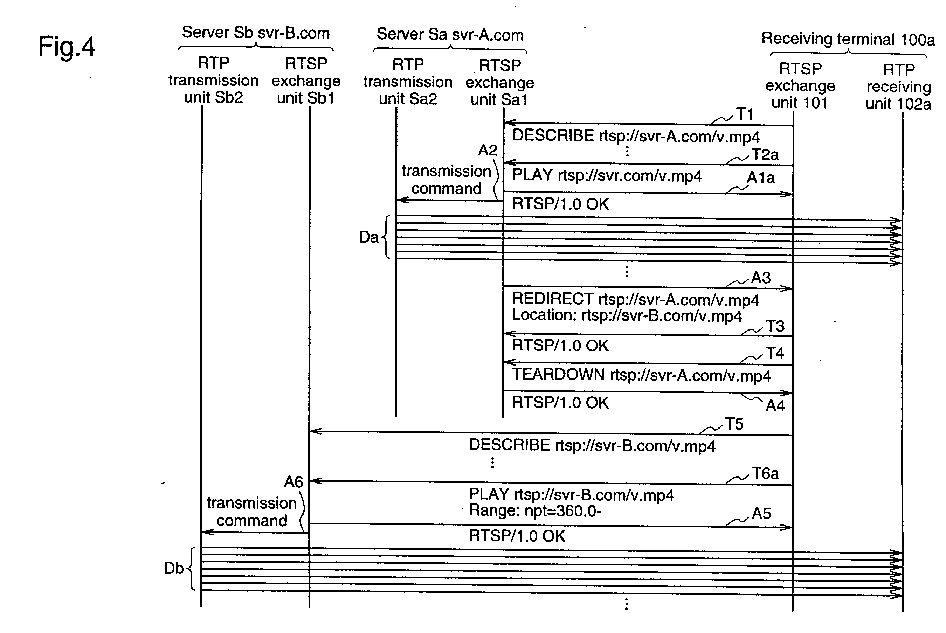

Figure 4 is a diagram for explaining an operation of the data playback apparatus 100a according to the first embodiment. Figure 5(a) shows messages, such as a Setup request, which are outputted between a DESCRIBE request and a PLAY request, and omitted in figure 4. In figure 4, for convenience of explanations, a specific server Sa having an RTSP exchange unit Sa1 and an RTP transmission unit Sa2, and an alternate server Sb having an RTSP exchange unit Sb1 and an RTP transmission unit Sb2 are shown as the servers S, as in figure 12.

When a DESCRIBE request (DESCRIBE rtsp://svr-A.com/v.mp4) T1 that requests file data (v.mp4) in the server (svr-A.com) Sa is issued from the RTSP exchange unit 101 in the receiving terminal 100a as an RTSP message M, the first server Sa receives the DESCRIBE request T1 by the RTSP exchange unit Sa1, and a response A11 with respect to this request T1 (see figure 5(a)) is issued from the RTSP exchange unit Sa1. Thereafter, message exchange is carried out between the server Sa and the receiving terminal 100a.

The response A11 to the DESCRIBE request T1 includes SDP information Isdp as shown in figure 5(a). When the response A11 is received by the RTSP exchange unit 101, the RTSP exchange unit 101 analyzes the SDP information Isdp included in the response A11, and outputs playback time information of the content data, the scale information Isv of the time stamp concerning video data and the scale information Isa of the time stamp concerning audio data, and the like, in the SDP information Isdp, to the time information storage processing unit 105a. The time information storage processing unit 105a stores these information in the fourth storage area D.

Thereafter, as shown in figure 5(a), a Setup request T12 for video data to the server Sa, a response A12 with respect to the request T12 to the receiving terminal 100a, a Setup request T13 for audio data to the server Sa, and a response A13 with respect to the request T13 to the receiving terminal 100a are issued.

Then, a PLAY request (PLAY rtsp://svr-A.com/v.mp4) T2a which includes playback range information (Range:0.000-60.000), requesting playback of file data (v.mp4) in the server (svr-A.com) Sa is issued from the RTSP exchange unit 101 as an RTSP message M. Here, the playback range information is information that is read from the time information storage processing unit 105a.

In the server Sa, the PLAY request T2a is received by the RTSP exchange unit Sa1, and a response A1a to the request T2a is issued from the RTSP exchange unit Sa1. The response A1a includes the playback range information (Range: 0.000-60.000), and time information Tsi indicating a time stamp value of an RTP packet which is received first in this session (time stamp initial value) is included in the RTP info field of the response A1a. The time information Tsi outputted from the RTSP exchange unit 101 is inputted to the time information storage processing unit 105a, and the time stamp initial value Vinfo indicated by the time information Tsi is stored in the third storage area C. Here, as the content data including image information and audio information are transmitted from the server, a time stamp initial value Vinfo1 associated with images and a time stamp initial value Vinfo2 associated with sounds are designated in the RTP info field. However, the not-yet-played range information Ir can be generated with at least one of these time stamp initial values. Therefore, in the following descriptions, the time stamp initial values Vinfo1 and Vinfo2 associated with images and sounds are not distinguished from each other, and referred to only as the time stamp initial value Vinfo.

When a command (transmission command) A2 that instructs to transmit data corresponding to the file (v.mp4) to the receiving terminal is issued to the RTP transmission unit Sa2 from the RTSP conversion unit Sa1 in the server Sa, the data corresponding to the file (v.mp4) are transmitted from the RTP transmission unit Sa2 to the receiving terminal 100a, being contained in RTP packets, as RTP packet data Da.

The RTP packet data Da are received by the RTP receiving unit 102a in the receiving terminal 100a in accordance with the control signal Ct from the RTSP exchange unit 101, and audio/video data (AV data) Dr corresponding to each frame are outputted. At this time, the information Tsp indicating a time stamp that is added to each RTP packet is outputted from the RTP receiving unit 102a to the time information storage processing unit 105a, and stored in the first and second storage areas A and B. More specifically, a time stamp value Vp of an RTP packet that was received most recently in the established session is stored in the first storage area A, and a time stamp value (initial value) Vp1 of an RTP packet that was received first in the established session is stored in the second storage area B.

The AV data Dr that are outputted from the RTP receiving unit 102a are decoded by the decoding unit 103, and decoded AV data Dd are outputted to the display unit 104a. In the display unit 104a, image display and sound playback is performed on the basis of the decoded AV data Dd.

As described above, when a REDIRECT request A3 is issued from the server Sa as an RTSP message in a state where data Da transmitted from the server Sa are received and played back in the receiving terminal 100a, the REDIRECT request A3 is received by the RTSP exchange unit 101 in the receiving terminal 100a. The REDIRECT request A3 is a request indicating to finish the session with the present server Sa, establish a session with the alternate server Sb, and receive data from the alternate server to be played. This REDIRECT request A3 includes Location information (rtsp://svr-B.com/v.mp4) indicating a URL (Universal Resource Locator) of the alternate server.

At this time, when it is informed from the RTSP exchange unit 101 to the time information storage processing unit 105a that the REDIRECT request A3 has been received, an operation processing for generating playback range information that indicates a time range of content data which are requested to the alternate server Sb is carried out in the time information storage processing unit 105a.

Figure 3 is a flowchart showing the processing for generating the playback range information.

In the time information storage processing unit 105a, judgement as to whether the time stamp initial value Vinfo is stored or not in the third storage area C is made (step S1). When the time stamp initial value Vinfo is stored in the third storage area C, an operation processing is carried out for subtracting the time stamp initial value Vinfo stored in the third storage area C from the latest time stamp value Vp that is stored in the first storage area A (step S2). On the other hand, when the time stamp initial value Vinfo is not stored in the third storage area C, an operation process is carried out for subtracting a time stamp initial value Vp1 that is stored in the second storage area B from the latest time stamp value Vp stored in the first storage area A (step S3).

Thereafter, a scaling process for converting a difference in the time stamp ΔVinfo (= Vp-Vinfo) or ΔVp1 (= Vp-Vp1) that is obtained by the subtraction process, into time information based on one second, using scale information of a time stamp stored in the fourth storage area D, is carried out to generate not-yet-played range information, i.e., information indicating a range of a not-yet-played portion in the content data as the data Da transmitted from the server Sa.

Then, a response T3 that acknowledges the REDIRECT request A3 is issued from the RTSP exchange unit 101, and further a TEARDOWN request T4 that request termination of the session is issued to the server Sa. In the server Sa, a processing for finishing transmission of the RTP packet data Da is carried out, as well as a response A4 that acknowledges the TEARDOWN request T4 is issued.

In the RTSP exchange unit 101 in the receiving terminal 100a, after the response A4 to the TEARDOWN request T4 from the server Sa is received, a DESCRIBED request (DESCRIBE rtsp://svr-B.com/v.mp4) T5 that requests file data (v.mp4) in the server (svr-B.com) Sb is issued as an RTSP message M, on the basis of the Location information of the alternate server Sb included in the REDIRECT request A3.

This DESCRIBE request T5 is received by the RTSP exchange unit Sb1 in the server Sb, and a response (now shown) to the request T5 is issued from the RTSP exchange unit Sb1 to the receiving terminal 100a. Thereafter, message exchange is further performed between the server Sb and the receiving terminal 100a.

When a PLAY request (PLAY rtsp://svr-B.com/v.mp4) T6a including not-yet-played range information (Range: ntp=360.0-), which requests playback of file data (v.mp4) in the server (svr-B.com) Sb is issued from the RTSP exchange unit 101 in the receiving terminal 100a as an RTSP message M, the PLAY request T6a is received by the RTSP exchange unit Sb1 in the server Sb. After a response A5 to the request T6a is issued to the receiving terminal 100a, a transmission command A6 that instructs to transmit the file data (v.mp4) to the receiving terminal 100a is issued from the RTSP exchange unit Sb1 to the RTP transmission unit Sb2 in the server Sb.

Then, in the RTP transmission unit Sb2, a processing is carried out for transmitting a not-yet-played portion in the file data (v.mp4) designated by the not-yet-played range information, being contained in RTP packets as RTP packet data Db, to the receiving terminal 100a in accordance with the control signal Cs from the RTSP exchange unit Sb1.

The transmitted data Db are received by the RTP receiving unit 102a in the receiving terminal 100a in accordance with the control signal Ct from the RTSP exchange unit 101, and audio/video data (AV data) Dr corresponding to each frame are outputted from the RTP receiving unit 102a. The AV data Dr are decoded by the decoding unit 103, and decoded AV data Dd are outputted to the display unit 104. In the display unit 104, image display and sound playback is performed on the basis of the decoded AV data Dd.

As described above, according to the first embodiment, the receiving terminal 100a that receives data requested to the server to be played back is provided with the time information storage processing unit 105a for generating not-yet-played range information that indicates a range of a not-yet-played portion in the data, on the basis of time information associated with a playback process, which is added to the data in predetermined data units. Accordingly, when receiving a message requesting to change the server (REDIRECT request) as a data transmission source, the receiving terminal transmits a message requesting the data (DESCRIBE request) to a new transmission source server, with adding the not-yet-played range information to the message. Therefore, when the server as the data transmission source is changed while playback of the desired data from the server is performed in the receiving terminal 1001, the receiving terminal 100a can receive the data from the head of the not-yet-played portion thereof and playback the same. In other words, receiving and playing back again already-played portions in the content data after the server is changed can be avoided, whereby the communication fees can be reduced, and further the played images and sounds can be viewed and listened efficiently.

In this first embodiment, the receiving terminal 100a issues a message (TEARDOWN request) T4 requesting the termination of the session to the server Sa, immediately after a message (REDIRECT request) A3 requesting to switch the server as a content data transmission source from the server Sa to another server Sb is received from the server Sa, i.e., following the response T3 to the server Sa with respect to the REDIRECT request A3. However, the receiving terminal 100a may issue the TEARDOWN request T4 to the server Sa, not immediately after receiving the REDIRECT request A3 but after confirming that the content data Db from the server Sb are received by the receiving terminal 100a.

In this case, the receiving terminal 100a can distinguish the content data transmitted from the server Sa from the content data transmitted from the server Sb, on the basis of information which is included in various fields of packets containing the content data.

For example, RTP (Real Time Transport Protocol), TCP/IP (Transmission Control Protocol/Internet Protocol), UDP/IP (User Datagram Protocol/Internet Protocol) and the like are used as typical transmission protocols for transmitting data on the Internet. A header corresponding to each transmission protocol such as RTP, TCP, UDP, and IP, i.e., an RTP header, a TCP header, a UDP header, or an IP header is included in the packets.

Accordingly, the receiving terminal 100a can distinguish the content data transmitted from the server Sa from the content data transmitted from the server Sb, on the basis of information indicating a transmission destination port number included in the TCP header or the UDP header, information indicating an SSRC (Session Resource) or a PT (Payload Type) included in the RTP header, or information indicating an IP address of the transmission source in the IP header. Here, the SSRC is an identification number (ID) for identifying an RTP packet.

### [Embodiment 2]

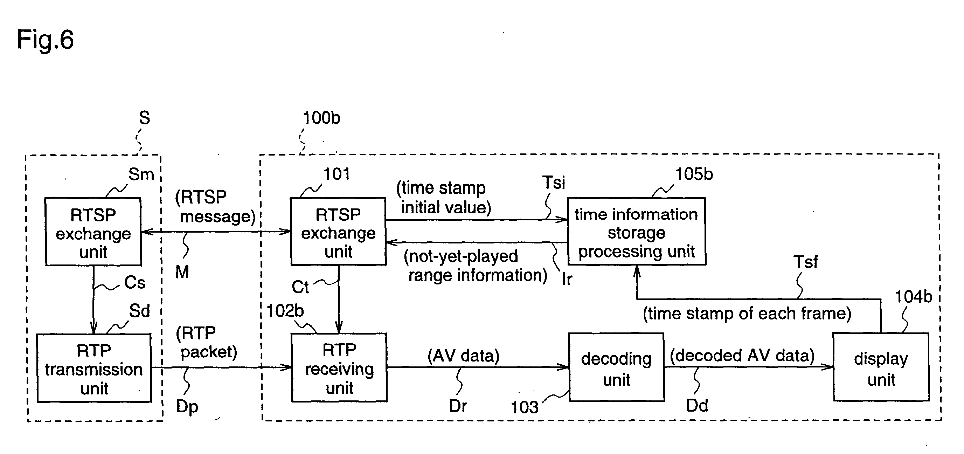

Figure 6 is a block diagram for explaining a data playback apparatus according to a second embodiment of the present invention.

A data playback apparatus (receiving terminal) 100b according to the second embodiment includes, in place of the RTP receiving unit 102a, the display unit 104a and the time information storage processing unit 105a of the data playback apparatus 100a according to the first embodiment, an RTP receiving unit 102b that carries out a data receiving process different from that of the RTP receiving unit 102a, a display unit 104b that carries out a data display process different from that of the display unit 104a, and a time information storage processing unit 105b that carries out a time information storage process different from that of the time information storage processing unit 105a.

More specifically, the RTP receiving unit 102b is the same as the RTP receiving unit 202 in the prior art data playback apparatus 200. The display unit 104b performs image display and sound playback on the basis of decoded AV data Dd, as well as outputs time stamp information Tsf that is added to each frame. The time information storage processing unit 105b has first to fourth storage areas A to D, as in the time information storage processing unit 105a. A time stamp value Vf that is added to the latest frame in an established session is stored in the first storage area A. A time stamp value Vf1 added to a frame that is displayed first in the established session is stored in the second storage area B. A time stamp initial value Vinfo that is indicated by information Tsi of an RTP info field and information other than the time stamps are stored in the third and fourth storage areas C and D, respectively, as in the time information storage processing unit 105a of the first embodiment.

Other construction of the data playback apparatus 100b according to the second embodiment is the same as that of the data playback apparatus 100a according to the first embodiment.

In the data playback apparatus (receiving terminal) 100b having such a construction according to the second embodiment, when a REDIRECT request that requests to switch a transmission source server for content data from a present server to another server is issued while the content data are being played back, not-yet-played range information indicating a range of a not-yet-played portion in the content data is generated on the basis of the time stamp initial value Vinfo of an RTP packet that is indicated by the RTP info field and the time stamp values Vf1 and Vfn added to frames to be played, and a PLAY request including the not-yet-played range information is issued to the another server. Therefore, as in the first embodiment, after the server is changed in accordance with a server changing request while the content data are being played, the receipt and playback of the content data can be continuously performed starting from a playback position at a time when the server has been changed.

In the first and second embodiments, a time stamp that is added to a received RTP packet or a time stamp indicating a display time that is added to each frame is used as the initial value and the latest value of the time stamp corresponding to the established session. However, a time stamp indicating a decoding time corresponding to each frame may be used as the initial value and the latest value of the time stamp in the established session.

### [Embodiment 3]

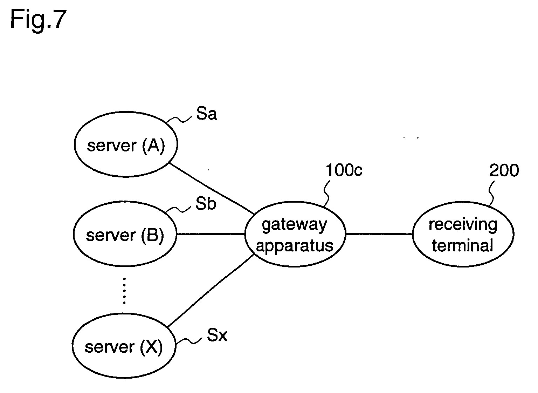

Figure 7 is a block diagram for explaining a data relay apparatus according to a third embodiment of the present invention. In this figure, the same reference numerals as those in figure 1 denote the same components of the data playback apparatus 100a according to the first embodiment.

A data relay apparatus 100c according to this third embodiment is a gateway apparatus that relays data which are supplied from a data transmission source to a data receiving terminal, and is connected to plural servers (A) Sa, (B) Sb, ..., (X) Sx, and a receiving terminal 200 on a network such as the Internet.

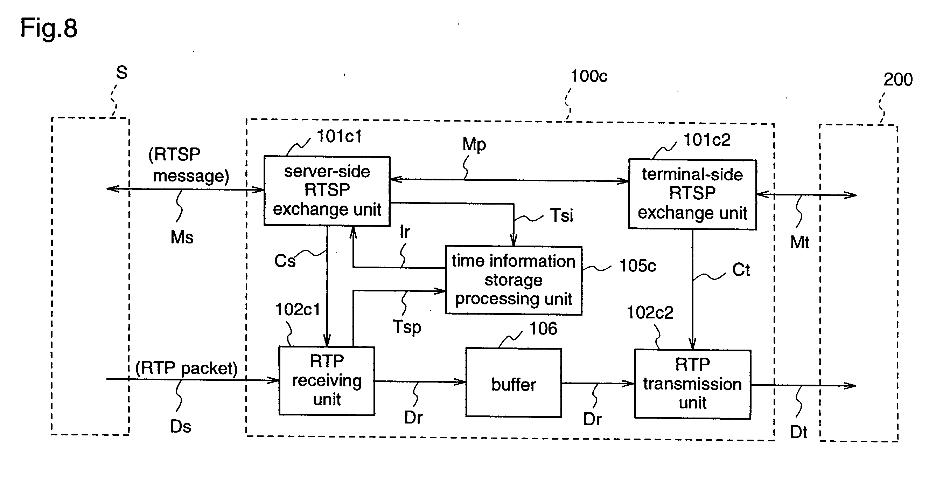

Figure 8 is a block diagram illustrating a specific structure of the data relay apparatus according to the third embodiment.

This gateway apparatus 100c includes a server-side RTSP exchange unit 101c1 that exchanges RTSP messages M with various servers S on a network; an RTP receiving unit 102c1 that receives content data (RTP packet data) Ds which are transmitted from the server S, being contained in RTP packets, in accordance with a control signal Cs that is outputted from the server-side RTSP exchange unit 101c1; and a time information storage processing unit 105c that stores time information Tsi and Tsp outputted from the server-side RTSP exchange unit 101c1 and the RTP receiving unit 102c1 as well as generates not-yet-played range information Ir that indicates a time range of a not-yet-played portion in the content data on the basis of the time information Tsi and Tsp.

The server-side RTSP exchange unit 101c1 exchanges the RTSP messages Ms with a server S to establish a session between the server S and the data relay apparatus 100c, outputs the time information Tsi indicating a time stamp initial value Vinfo corresponding to the established session, to the time information storage processing unit 105c, and transmits the not-yet-played information Ir that is read from the time information storage processing unit 105c to the server S, with being contained in a PLAY request. The time information Tsi indicating the time stamp initial value Vinfo is information that is designated by an RTP info field included in a response from the server S to the PLAY request from the receiving terminal 200, as in the first embodiment.

The RTP receiving unit 102c1 receives the RTP packets Ds from the server S, and outputs audio/video data (AV data) Dr corresponding to each frame, contained in the RTP packets, as well as outputs the time information Tsp indicating a time stamp that is added to each RTP packet, to the time information storage processing unit 105c.

The time information storage processing unit 105c has a memory (not shown) for storing the time stamp initial value Vinfo that is indicated by the information Tsi of the RTP info field, and time stamp values Vp and Vp1 which are added to each RTP packet, and generates the not-yet-played range information Ir indicating a time range of a not-yet-played portion in the content data on the basis of the time stamp values stored in the memory. This process for generating the not-yet-played range information Ir in the time information storage processing unit 105c is the same as that in the time information storage processing unit 105a in the data playback apparatus 100a according to the first embodiment.

The gateway apparatus 100c includes a buffer 106 for temporarily retaining the AV data Dr from the RTP receiving unit 102c1, a terminal-side RTSP exchange unit 101c2 for establishing a session to communicate data with the receiving terminal 200 on the basis of message information Mp from the server-side RTSP exchange unit 101c1, and an RTP transmission unit 102c2 for transmitting data Dr stored in the buffer 106, being contained in RTP packets, as RTP packet data Dt to the receiving terminal 200 in accordance with a control signal Ct from the terminal-side RTSP exchange unit 101c2.

The RTP transmission unit 102c2 includes an attribute information rewriting unit (not shown) for rewriting attribute values, such as a time stamp value, a sequence number, an SSRC value, and a PT value, which are added to RTP packets transmitted from a server after server changing, to respective attribute values which are added to the RTP packets transmitted from a server before the server changing, so as to prevent the playback process for the content data in the receiving terminal from being interrupted, and transmits the RTP packets having rewritten information to the receiving terminal 200.

Next, the operation of the relay apparatus will be described.

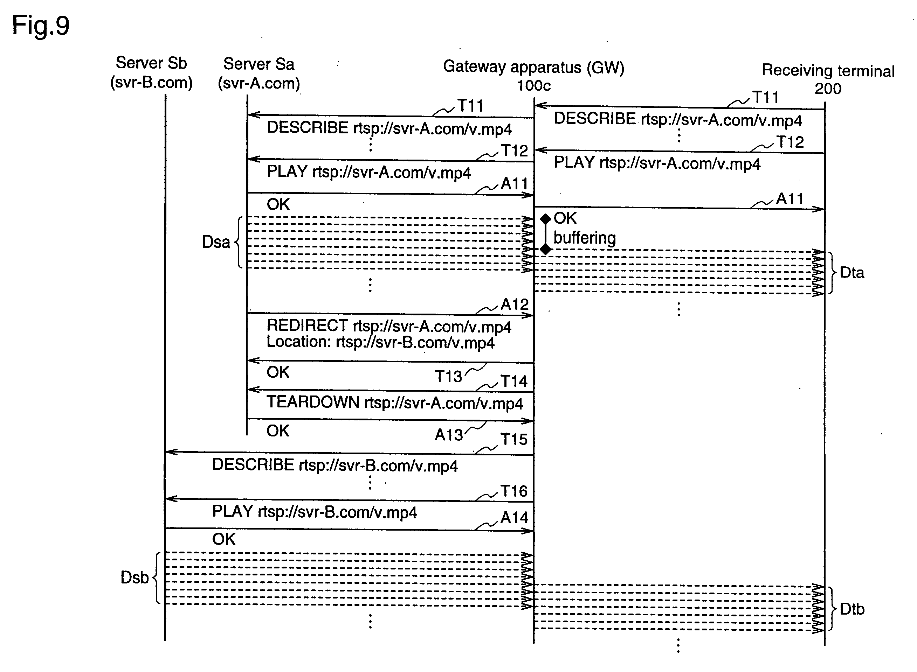

Figure 9 is a diagram showing an operation flow of the data relay apparatus according to the third embodiment.

Hereinafter, a description is given of a case where a server that supplies data of a file (v.mp4) as content data is switched from the first server (svr-A.com) Sa to the second server (svr-B.com) Sb.

When a DESCRIBE request (DESCRIBE rtsp://svr-A.com/v.mp4) T11 that requests the file data (v.mp4) in the server (svr-A.com) Sa is issued from the receiving terminal 200 as an RTSP message Mt, the terminal-side RTSP exchange unit 101c2 in the gateway apparatus 100c receives the DESCRIBE request T11, and transmits message information Mp indicating the request T11 to the server-side RTSP exchange unit 101c1. The server-side RTSP exchange unit 101c1 carries out a process for transmitting the DESCRIBE request T11 indicated by the message information Mp as an RTSP message Ms to the server Sa. When the DESCRIBE request T11 is received by the server Sa, a response (not shown) to this request T11 is issued, and this response is transmitted to the receiving terminal 200 through the server-side RTSP exchange unit 101c1 and the terminal-side RTSP exchange unit 101c2 in the data relay apparatus 100c.

Thereafter, message exchange is further performed between the server Sa and the receiving terminal 200 via the gateway apparatus 100c.

When sessions for communication (states in which data can be communicated according to the RTP) between the gateway apparatus 100c and the receiving terminal 200 and between the gateway apparatus 100c and the server Sa are established, a PLAY request (PLAY rtsp://svr-A.com/v.mp4) T12 including playback range information (Range: 0.000-60.000), which requests playback of the file data (v.mp4) in the server (svr-A.com) Sa, is issued from the receiving terminal 200 as an RTSP message Mt. The PLAY request T12 is received by the terminal-side RTSP exchange unit 101c2 in the gateway apparatus 100c, and message information Mp indicating the request T12 is transmitted to the server-side RTSP exchange unit 101c1.

When the PLAY request T12 is transmitted as the RTSP message Ms from the server-side RTSP exchange unit 101c1 to the server Sa, this PLAY request T12 is received by the server Sa, and a response (OK) A11 to this request T12 is issued. This response A11 includes playback range information (Range: 0.000-60.000). Further, RTP info field information corresponding to the response A11 includes time information Tsi indicating a time stamp value of an RTP packet that is transmitted first in this session (time stamp initial value) Vinfo. The time information Tsi indicating the time stamp initial value Vinfo is inputted to the time information storage processing unit 105c, and the time stamp initial value Vinfo is stored in the third storage area C in the memory of the time information storage processing unit 105c.

The message information Mp indicating the response A11 is transmitted from the server-side RTSP exchange unit 101c1 to the terminal-side RTSP exchange unit 101c2. The response A11 indicated by the message information Mp is transmitted from the terminal-side RTSP exchange unit 101c2 to the receiving terminal 200 as an RTSP message Mt.

Thereafter, the file data (v.mp4) including image information and sound information as the content data requested by the receiving terminal 200 are transmitted from the server Sa to the gateway apparatus 100c, being contained in RTSP packets, as the RTSP packet data Dsa.

The RTSP packet data Dsa are received by the RTP receiving unit 102c1 in the gateway apparatus 100c in accordance with the control signal Cs from the server-side RTSP exchange unit 101c1, and audio/video data (AV data) Dr corresponding to each frame are outputted. At this time, the time information Tsp indicating the time stamp value that is added to each RTP packet is outputted from the RTP receiving unit 102c1 to the time information storage processing unit 105c, and stored in the first and second storage areas A and B in the memory (see figure 2). A time stamp value (initial value) Vp1 of an RTP packet that was received first in this session is stored in the storage area B. A time stamp value Vp of the latest RTP packet that was received most recently in this session is stored in the first storage area A.

The AV data Dr outputted from the RTP receiving unit 102c1 are stored successively in the buffer 106. The AV data Dr stored in the buffer 106 are transmitted by the RTP transmission unit 102c2 to the receiving terminal 200, being contained in RTP packets, as the RTP packet data Dta.

When a REDIRECT request A12 is issued from the server Sa as an RTSP message Ms in a state where the content data are transmitted from the server Sa to the receiving terminal 200 via the gateway apparatus 100c and the content data received as the RTP packet data Dta are played back in the receiving terminal 200, the REDIRECT request A12 is received by the server-side RTSP exchange unit 101c1 in the gateway apparatus 100c. This REDIRECT request A12 requests to finish the session with the present server (first server) Sa, establish a session with an alternate server (second server) Sb, and receive data supplied from the alternate server Sb to be played back. This REDIRECT request A12 includes Location information (rtsp://svr-B.com/v.mp4) indicating an URL (Universal Resource Locator) of the alternate server (second server) Sb.

At this time, the server-side RTSP exchange unit 101c1 informs to the time information storage processing unit 105c that it has received the REDIRECT request A12. Then, the time information storage processing unit 105c carries out an operation processing for generating not-yet-played range information Ir indicating a time range of a not-yet-played portion in the content data which are requested to the second server Sb. The processing for generating the not-yet-played information Ir is the same as that in the time information storage processing unit 105a according to the first embodiment.

A response (OK) T13 that acknowledges the REDIRECT request A12 is issued from the server-side RTSP exchange unit 101c1 in the gateway apparatus 100c to the server Sa. Further, a TEARDOWN request T14 that requests termination of the session is issued to the server Sa. In the server Sa, a processing for finishing transmission of the RTP packet data Ds is carried out, as well as a response (OK) A13 that acknowledges the TEARDOWN request T14 is issued.

In the server-side RTSP exchange unit 101c1 of the gateway apparatus 100c, after the response A13 to the TEARDOWN request T14 is received from the server Sa, a DESCRIBE request (DESCRIBE rtsp://svr-B.com/v.mp4) T15 that request the file data (v.mp4) in the server (svr-B.com) Sb is issued as the RTSP message Ms, on the basis of the Location information of the alternate server Sb included in the REDIRECT request A12.

This DESCRIBE request T15 is received by the server Sb, and a response (not shown) to the request T15 is issued to the gateway apparatus 100c. Thereafter, message exchange is further performed between the server Sb and the gateway apparatus 100c.

When a PLAY request (PLAY rtsp://svr-B.com/v.mp4) T16 including the not-yet-played range information Ir, which requests playback of the file data (v.mp4) in the server (svr-B.com) is issued as the RTSP message Ms from the server-side RTSP exchange unit 101c1 of the gateway apparatus 100c, this PLAY request T16 is received by the server Sb and a response A14 to the request T16 is issued.

Thereafter, a portion of the file data (v.mp4), indicated by the not-yet-played range information Ir is transmitted being contained in RTP packets, as RTP packet data Dsb from the server Sb to the gateway apparatus 100c.

The RTP packet data Dsb are received by the RTP receiving unit 102c in the gateway apparatus 100c in accordance with the control signal Cs from the server-side RTSP exchange unit 101c1, and audio/video data (AV data) Dr corresponding to each frame are outputted. The AV data Dr are temporarily retained in the buffer 106. The AV data Dr retained in the buffer 106 are transmitted by the RTP transmission unit 102c2 to the receiving terminal 200, as RTP packet data Dt being contained in RTP packets.

At this time, in the RTP transmission unit 102c2, attribute values such as a time stamp value, a sequence number, an SSRC value, and a PT value, which are added to RTP packets transmitted from the alternate server Sb are rewritten to respective attribute values added to the RTP packets transmitted from the server Sa, so as to prevent the playback process for the content data in the receiving terminal 200 from being interrupted, and the RTP packets having the rewritten attribute values are transmitted to the receiving terminal 200.

As described above, according to the third embodiment, the gateway apparatus 100c that carries out a relay processing of receiving content data from the server and transmitting the received content data to the receiving terminal retains time stamps added to RTP packets from the server, generates range information indicating a range of a not-yet-transmitted portion in the content data which are requested by the receiving terminal on the basis of the retained time stamp values when a REDIRECT request that requests to change the server transmitting the content data is issued, and requests the not-yet-transmitted portion in the content data which are requested by the receiving terminal to a new server. Therefore, when a transmission server is changed in accordance with the REDIRECT request during playback of the content data in the receiving terminal, the receiving terminal can receive the requested content data from the head of the not-yet-transmitted portion.

Further, in this third embodiment, the buffer 106 that temporarily retains the AV data Dr from the RTP receiving unit 102c1 is included. Therefore, the receiving terminal 200 is hard to be affected by jitter resulting from the network between the server and the data relay apparatus.

In this third embodiment, when the transmission server is changed, the RTP transmission unit 102c2 rewrites attribute values that are added to RTP packets transmitted from a new server Sb, to attribute values added to RTP packets transmitted from the previous server Sa so as to prevent the playback process for the content data in the receiving terminal 200 from being interrupted. Therefore, in the receiving terminal, even when the transmission server is changed while content data from the transmission server are being played back, the playback of the content data is performed without interruption, thereby avoiding disturbed display states of reproduced images or noises in played sounds.

In this third embodiment, the data relay apparatus (gateway apparatus) 100c issues a message (TEARDOWN request) T14 requesting the termination of a session to the server Sa immediately after a message (REDIRECT request) A12 requesting to switch a server as a content data transmission source from the first server Sa to the second server Sb is received from the first server Sa, i.e., following the response T13 to the server Sa with respect to the REDIRECT request A12. However, the data relay apparatus 100c may issue the TEARDOWN request T14 to the server Sa, not immediately after receiving the REDIRECT request A12 but after confirming that the content data Dsb from the server Sb are received by the data relay apparatus 100c.

In this case, as described in the first embodiment, the data relay apparatus 100c can distinguish the content data Dsa transmitted from the server Sa from the content data Dsb transmitted from the server Sb, on the basis of information indicating a transmission destination port number included in the TCP header or the UDP header, information indicating an SSRC (Session Resource) or a PT (Payload Type) included in the RTP header, or information indicating an IP address of the transmission source in the IP header.

In the first and second embodiments, receiving terminals that can be connected to servers via a network such as the Internet are shown as playback apparatus that receive data requested to the server and play back the same. However, as specific examples of the receiving terminal, there are PCs (personal computers) and portable phones and the like.

### [Embodiment 4]

A portable phone that plays back data requested to a server while receiving the same as the data playback apparatus according to the first embodiment will be described as a fourth embodiment.

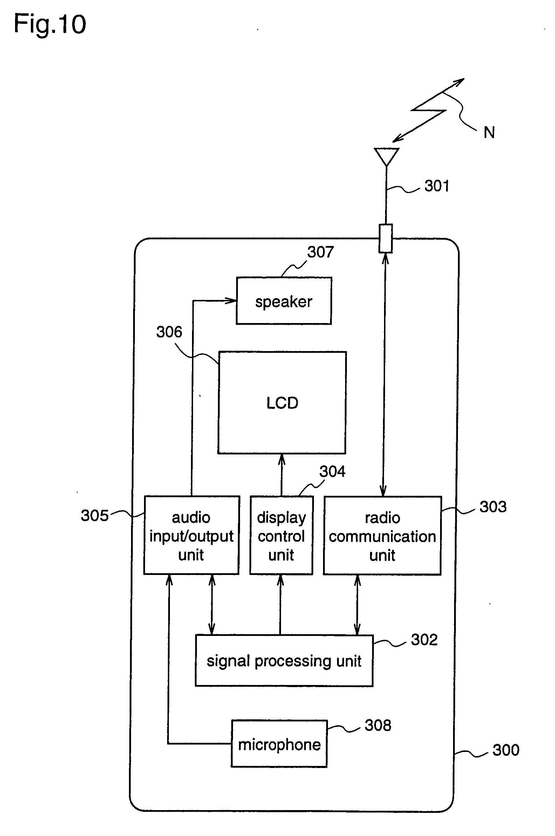

Figure 10 is a diagram for explaining a portable phone according to the fourth embodiment.

A portable phone 300 according to the fourth embodiment includes a signal processing unit 302 for carrying out various signal processings, and a radio communication unit 303 for outputting a radio signal N received via an antenna 301 as a received signal to the signal processing unit 302 as well as transmitting a transmission signal generated by the signal processing unit 302 as a radio signal N via the antenna 301.

The portable phone 300 further has a liquid crystal display panel (LCD) 306 for displaying images, a microphone 308 for inputting voices, a speaker 307 for playing back an audio signal, a display control unit 304 for receiving an image signal processed by the signal processing unit 302 and controlling the liquid crystal display panel (LCD) 306 so that the image display is performed in accordance with the image signal, and an audio input/output unit 305 for outputting an audio signal inputted from the microphone 308 to the signal processing unit 302 as well as outputting an audio signal processed by the signal processing unit 302 to the speaker 307. To simplify the explanations, a button manipulation part of the portable phone is not shown here.

The signal processing unit 302 performs the same playback process as that in the data playback apparatus 100a according to the first embodiment. More specifically, the signal processing unit 302 has signal processing units corresponding to the RTSP exchange unit 101, the RTP receiving unit 102a, the decoding unit 103, and the time information storage processing unit 105a on the receiving terminal end of the first embodiment. Further, the display control unit 304 and the liquid crystal display panel (LCD) 306 in the portable phone 300 according to the fourth embodiment correspond to the display unit 104a according to the first embodiment.

In the portable phone 300 having such a construction, when a message requesting to change a server as a data transmission source is received in a state where data requested to the server are being received and played back, a data requesting process is carried out to transmit a message requesting data to a new transmission server with adding the not-yet-played range information that indicates a range of a not-yet-played portion in the data to the message.

In this fourth embodiment, a portable phone that carries out the same data playback process as that in the data playback apparatus according to the first embodiment is shown. However, this portable phone may carry out the same data playback process as in the data playback apparatus 100b according to the second embodiment.

## Claims

1. A data playback apparatus which requests data including at least one of image information and audio information, and plays back the data transmitted in accordance with the request while receiving the data, comprising:
a message transmission/receiving unit operable to transmit/receive messages to establish a state in which data can be received, and outputting a control signal that controls a receiving operation for the data;
a data receiving unit operable to receive the data in accordance with the control signal; and
a range information generation unit operable to generate not-yet-played range information that indicates a range of a not-yet-played portion in the data, on the basis of time information concerning a playback process, which is added to the data in predetermined data units,
said message transmission/receiving unit transmitting a message for requesting data corresponding to the not-yet-played portion indicated by the not-yet-played range information to a new server, when receiving a message requesting to change the server as a target of the data request.

2. The data playback apparatus of Claim 1 wherein
the time information is information which is added to the data for each frame as the data unit, and indicates a time when the frame is displayed.

3. The data playback apparatus of Claim 1 wherein
the data receiving unit receives the data which are contained in packets, and
the time information is added to each of the packets.

4. The data playback apparatus of Claim 3 wherein
the range information generation unit generates the not-yet-played range information on the basis of latest time information added to a latest packet that was received by the data receiving unit, and either first initial time information added to a packet that was received first after the data receivable state is established, or second initial time information added to a packet that is to be received first after the data receivable state is established, which is obtained by the transmission/receipt of messages by the message transmission/receiving unit.

5. A data playback method for requesting data including at least one of image information and audio information, and playing back the data transmitted in accordance with the request while receiving the same, comprising:
a message transmission/receiving step of transmitting/receiving messages to establish a state in which data can be received, and generating a control signal that controls a receiving operation for the data;
a data receiving step of receiving the data in accordance with the control signal after the data receivable state is established; and
a range information generation step of generating not-yet-played range information that indicates a range of a not-yet-played portion in the data, on the basis of time information concerning a playback process, which is added to the data in predetermined data units,
said message transmission/receiving step transmitting a message for requesting data corresponding to the not-yet-played portion indicated by the not-yet-played range information to a new server, when a message for requesting to change the server as a target of the data request is received.

6. A data relay apparatus that is connected to plural servers via a network, and requests data including at least one of image information and audio information to a specific server selected from the plural servers, to relay the data transmitted from the specific server in accordance with the request to transmit the same, including:
a server-side message exchange unit operable to exchange messages with the specific server to establish a state where the data transmitted from the specific server can be received, and output a receipt control signal that controls a receiving operation for the transmitted data;
a data receiving unit operable to receive the data transmitted from the specific server in accordance with the receipt control signal; and
a range information generation unit operable to generate not-yet-played range information that indicates a range of a not-yet-played portion in the data, on the basis of time information concerning a playback process, which information is added to the data in predetermined data units,
said server-side message exchange unit transmitting a message for requesting the data to an alternate server with adding the not-yet-played range information to the message, when a message for requesting to switch a server as a supply source of the data from the specific server to the alternate server is received from the specific server.

7. The data relay apparatus of Claim 6 including:
a buffer for temporarily retaining the received data;
a terminal-side message exchange unit operable to exchange messages with a transmission destination to establish a state where the data retained in the buffer can be transmitted, and outputting a transmission control signal that controls a transmission operation for the data; and
a data transmission unit operable to transmit the data retained in the buffer on the basis of the transmission control signal.

8. The data relay apparatus of Claim 7 wherein
the data receiving unit receives the data which are contained in packets transmitted from the server as a transmission source of the data, and
the data transmission unit has an attribute information rewriting section for rewriting attribute information that is added to packets which contain data transmitted from the alternate server, into attribute information that is added to packets which contain the data transmitted from the specific server so that a data playback process in a transmission destination of the data is not interrupted, and transmits the packets which contain the data transmitted from the alternate server, with rewriting the attribute information thereof into the attribute information of the packets containing the data transmitted from the specific server.

9. A data relay method for requesting data including at least one of image information and audio information, to a specific server selected from plural servers on a network, and relaying the data transmitted from the specific server in accordance with the request to transmit the same, comprising:
a message exchange step of exchanging messages with the specific server to establish a state in which data transmitted from the specific server can be received, and generating a receipt control signal that controls a receiving operation for the transmitted data;
a data receiving step of receiving the data transmitted from the specific server in accordance with the receipt control signal after the transmitted data receivable state is established; and
a range information generation step of generating not-yet-played range information that indicates a range of a not-yet-played portion in the data on the basis of time information concerning a playback process, which is added to the data in predetermined data units,
said message exchange step transmitting a message for requesting the data to an alternate server with adding the not-yet-played range information to the message, when a message for requesting to switch a server as a supply source of the data from the specific server to the alternate server is issued from the specific server.
